# FASCICULE DE BREVET EUROPEEN

(11) **EP 2 887 679 B1**
(45) Date de publication et mention de la délivrance du brevet: **06.02.2019**
(21) Numéro de dépôt: 14199046.5
(22) Date de dépôt: 18.12.2014
(51) Int. Cl.: H04N 21/218, H04N 21/432, H04N 21/4363, H04N 21/436

(54) **Procédé de gestion de la restitution de contenus multimédia**
Verfahren zur Verwaltung der Wiedergabe von Multimediainhalten
Method for managing multimedia content playback

(30) Priorité: 19.12.2013 FR 1363082
(43) Date de publication de la demande: 24.06.2015
(73) Titulaire: Orange, 75015 Paris (FR)
(72) Inventeur: Marchand, Hervé, 35770 VERN SUR SEICHE (FR); Rivoalen, Mathieu, 22300 LANNION (FR); Duvivier, Philippe, 35133 ROMAGNE (FR)
(74) Mandataire: Regimbeau

(56) Documents cités:
- WO-A2-2011/099814
- US-A1- 2006 092 037

## Description

### DOMAINE TECHNIQUE GENERAL

La présente invention concerne un procédé de gestion de la restitution d'un contenu multimédia dans un réseau domestique.

### ETAT DE L'ART

De nombreux dispositifs permettent de restituer des contenus multimédia dans un réseau domestique.

Par exemple, des télévisions connectées permettent de projeter des photos, des vidéos personnelles, des chaines de télévision, etc.

Si l'utilisateur dispose de plusieurs équipements capables de rendre un contenu multimédia, il doit choisir l'équipement qui va assurer la restitution de manière manuelle. De nombreuses techniques permettent ce choix d'un équipement, telles que la sélection sur un écran, la récupération d'un tag NFC/QRCode, etc.

Ces techniques apportent satisfaction tant que l'utilisateur reste devant l'équipement qu'il a choisi. S'il se déplace dans de pièce en pièce, il est nécessaire de continuer à choisir manuellement l'équipement qui met en oeuvre la restitution, ce qui est peu ergonomique.

Il serait ainsi souhaitable de faciliter la sélection d'un équipement de restitution de contenus dans un réseau domestique.

US2006/092037 & WO2011/099814: Procédé pour commander la lecture de vidéo dans un environnement avec une pluralité d'affichages. La méthode mesure la force du signal pour localiser le dispositif mobile de l'utilisateur et affecte le contenu au dispositif de lecture le plus proche.

### PRESENTATION DE L'INVENTION

La présente invention se rapporte ainsi selon un premier aspect à un procédé de gestion de la restitution d'un contenu multimédia dans un réseau domestique connectant :
- un dispositif comprenant un module de traitement de données ;
- une pluralité d'équipements adaptés pour restituer ledit contenu multimédia ;
- un terminal mobile ;
   le procédé étant caractérisé en ce qu'il comprend la mise en oeuvre par le module de traitement de données du dispositif d'étapes de :
   (a) identification d'un point d'accès du terminal mobile (2) au réseau ;
   (b) détermination d'un équipement cible, l'équipement cible étant l'équipement du réseau le plus proche dudit point d'accès identifié ;
   (c) envoi d'une requête de restitution du contenu par l'équipement cible 1a.

Le présent procédé permet de localiser un utilisateur dans le réseau via son terminal mobile. Est ainsi automatiquement sélectionné l'équipement le plus adapté pour restituer le contenu multimédia souhaité.

Selon d'autres caractéristiques avantageuses et non limitatives :
- le procédé comprend en outre la mise en oeuvre par les moyens de traitement de données du dispositif d'étapes de :
   (d) Identification d'un nouveau point d'accès du terminal mobile au réseau, de sorte à détecter un déplacement du terminal mobile ;
   (e) détermination d'un nouvel équipement cible, le nouvel équipement cible étant l'équipement du réseau le plus proche dudit nouveau point d'accès identifié ;
   (f) si le nouvel équipement cible est différent de l'ancien équipement cible, envoi d'une requête de poursuite de la restitution du contenu par le nouvel équipement cible.
   Le procédé permet ainsi de suivre un déplacement de l'utilisateur et de mettre à jour automatiquement l'équipement de restitution ;
- l'étape (f) comprend, si le nouvel équipement cible est différent de l'ancien équipement cible, l'envoi d'une requête de basculement de la restitution du contenu de l'ancien équipement cible vers le nouvel équipement cible.
   Le basculement permet d'interrompre automatiquement la restitution sur l'ancien équipement cible, et évite à l'utilisateur d'utiliser une télécommande pour le faire ;
- le procédé comprend en outre la mise en oeuvre par les moyens de traitement de données du dispositif d'une étape préalable (a0) de détermination et de stockage sur un module de stockage de données du dispositif d'une topologie du réseau ;
- la détermination d'un équipement cible comprend la comparaison de positions topologiques du point d'accès identifié et de chaque équipement. L'utilisation d'une topologie du réseau facilite la détermination de la position de l'utilisateur et le choix optimal de l'équipement pour la restitution ;
- chaque équipement est connecté au réseau domestique conformément au standard IEEE 1905.
   Ce protocole est particulièrement adapté à l'établissement de la topologie du réseau ;
- chaque équipement soit comprend une capacité de communication sans-fil, soit est connecté au réseau via un module disposant d'une capacité de communication sans-fil ;
- un point d'accès du terminal mobile est soit un équipement comprenant une capacité de communication sans-fil, soit un desdits modules disposant d'une capacité de communication sans-fil.
   La multiplication de noeuds disposant d'une capacité sans fil augmente la fiabilité du positionnement du terminal mobile dans le réseau et donc la sélection optimale de l'équipement de restitution ;
- lesdits modules sont des plugs CPL ;
   Il s'agit d'équipements communément présents dans un réseau domestiques et disposant généralement d'une connectivité sans fil ;
- ledit dispositif est le terminal mobile.
   En utilisant le terminal, on s'affranchit de la nécessité de tout serveur supplémentaire ;
- ledit dispositif est un boitier d'accès à internet du réseau domestique. Un boitier d'accès à Internet est généralement toujours présent dans un réseau domestique et présente généralement toutes les caractéristiques pour mettre en oeuvre efficacement le présent procédé.

Selon un deuxième aspect, l'invention concerne un dispositif de gestion de la restitution d'un contenu multimédia dans un réseau domestique connectant :
- une pluralité d'équipements adaptés pour restituer ledit contenu multimédia ;
- un terminal mobile ;
le dispositif étant caractérisé en ce qu'il comprend un module de traitement de données configuré pour mettre en oeuvre :
- un module d'identification d'un point d'accès du terminal mobile au réseau ;
- un module de détermination d'un équipement cible, l'équipement cible étant l'équipement du réseau le plus proche dudit point d'accès identifié ;
- un module d'envoi d'une requête de restitution du contenu par l'équipement cible.

L'invention concerne plus particulièrement un boitier d'accès à internet d'un réseau domestique comprenant un dispositif selon le deuxième aspect de gestion de la restitution d'un contenu multimédia dans le réseau domestique.

Un boiter d'accès à Internet (ou passerelle domestique) est en effet comme expliqué un dispositif généralement toujours présent dans un réseau domestique et présentant toutes les caractéristiques pour mettre en oeuvre efficacement le procédé selon le premier aspect.

Selon un troisième et un quatrième aspect, l'invention concerne respectivement un produit programme d'ordinateur comprenant des instructions de code pour l'exécution d'un procédé de gestion de la restitution d'un contenu multimédia dans un réseau domestique selon le premier aspect de l'invention lorsque le programme est exécuté sur un ordinateur ; et un moyen de stockage lisible par un équipement informatique sur lequel un produit programme d'ordinateur comprend des instructions de code pour l'exécution d'un procédé de gestion de la restitution d'un contenu multimédia dans un réseau domestique le premier aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

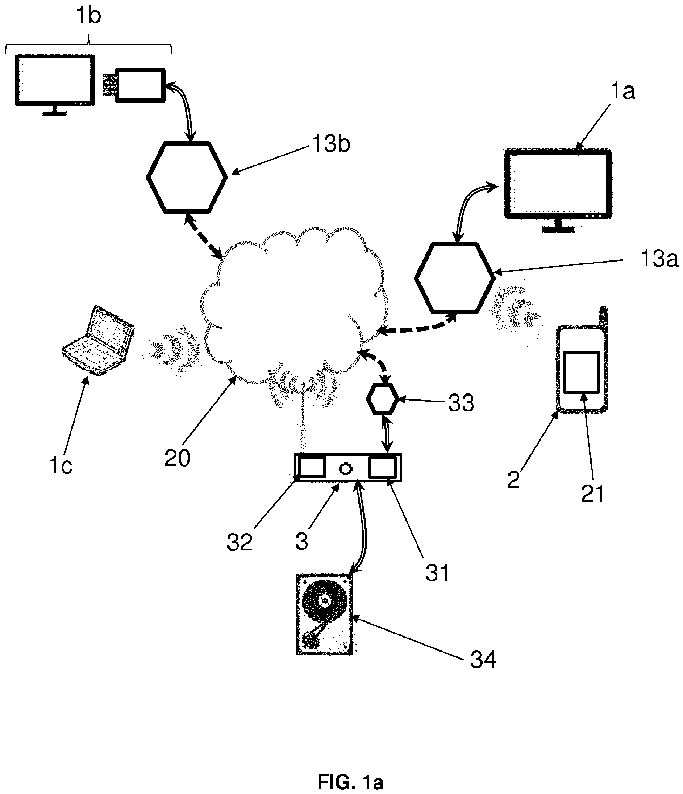

- la figure 1a représente une architecture de réseau pour la mise en oeuvre du procédé selon l'invention ;

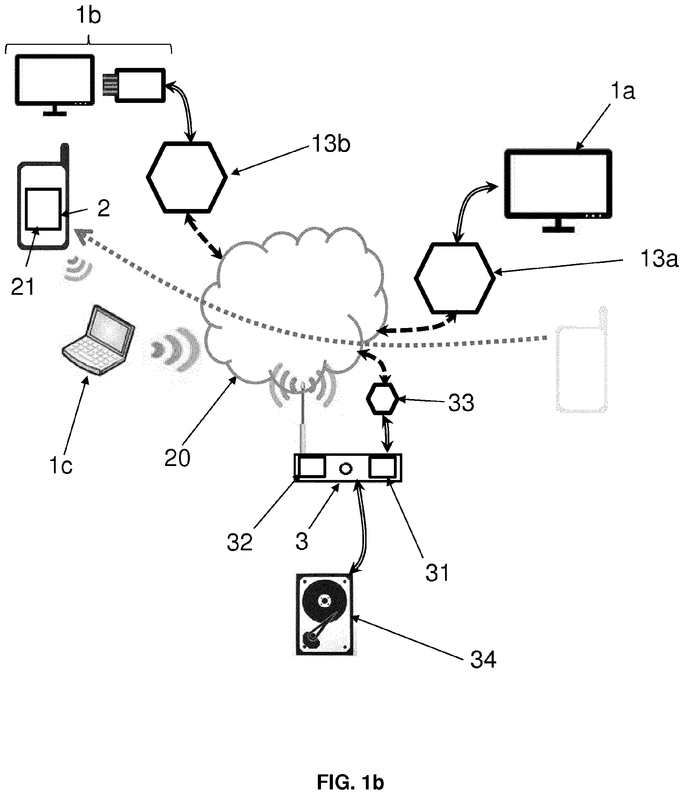

- la figure 1b représente une architecture de réseau pour la mise en oeuvre du procédé selon l'invention, après déplacement d'un utilisateur.

### DESCRIPTION DETAILLEE

### Architecture générale

Le procédé selon l'invention est un procédé de gestion de la restitution d'un contenu multimédia (et en particulier un procédé de restitution de ce contenu) dans un réseau domestique 20 du type de celui illustré par la **figure 1a****.** Il s'agit typiquement du réseau local d'un foyer.

Les contenus multimédia impliqués peuvent être toute sorte de contenus numériques audio et/ou vidéo tels que des e-mails, des SMS (affichés ou vocalisés), des photos, des vidéos, des pages internet, la météo, la bourse, etc.

Le réseau domestique 20 comprend une pluralité de dispositifs dont :
- un terminal mobile 2 (un smartphone, une tablette tactile, une montre connectée, etc.) ;
- un dispositif 2, 3 comprenant un module de traitement de données 21, 31 (tel qu'un processeur), qui est le dispositif qui va en particulier mettre en oeuvre les étapes du présent procédé ;
- au moins deux équipements 1a, 1b, 1c.

Le dispositif 2, 3 est en particulier soit le terminal mobile 2 lui-même, soit un boitier d'accès à Internet 3 (IAD, Internet Access Device, communément appelé « box » ou passerelle domestique), mais on comprendra qu'il peut être un serveur du réseau 20, un boitier multimédia (set-top box), etc.

Dans la suite de la présente description, on prendra l'exemple particulier d'un mode de réalisation dans lequel le dispositif est le boitier 3, mais on comprendra que l'invention n'est pas limitée à ce cas. De façon générale, tout dispositif du réseau 20 comprenant un module de traitement de données et avantageusement un module de stockage de données (l'on verra plus loin pourquoi) peut remplir le rôle de dispositif. L'utilisation d'un boitier 3 est préférée car c'est un dispositif central du réseau 20 disposant naturellement des capacités physiques pour la mise en oeuvre du procédé. Dans l'exemple de la figure 1a, il est relié à un périphérique 34 pour le stockage des contenus multimédia (par exemple un disque dur externe, avantageusement un serveur NAS, Network Attached Storage).

Les équipements 1a, 1b, 1c sont des équipements adaptés pour restituer des contenus multimédia. Ils disposent pour cela de capacité audio et/ou vidéo. Les équipements 1a, 1b, 1c peuvent être de nombreux types, et sont préférentiellement repartis dans le foyer (un par pièce).

Dans l'exemple représenté, l'équipement 1a est une télévision connectée (en particulier conforme au standard DLNA, Digital Living Network Alliance), l'équipement 1b est une télévision classique équipée d'une clé lui permettant d'être connectée, et l'équipement 1c est un ordinateur portable. L'équipement 1a est dans le salon, l'équipement 1b est dans une chambre et l'équipement 1c est dans le bureau. De nombreux autres types d'équipements et de configurations sont possibles.

De façon préférée, chaque équipement 1a, 1b, 1c dispose soit d'une capacité de connexion sans fil, soit est connecté au réseau via l'intermédiaire d'un module 13a, 13b disposant d'une telle capacité. Par sans-fil, on entend de nombreuses technologies telles que Wi-Fi, Bluetooth, ZigBee, etc. Il faut toutefois comprendre que l'existence d'une capacité sans-fil n'exclut pas que l'équipement soit connecté en filaire, par un câble (par exemple Ethernet). Le présent procédé n'est pas limité à l'existence systématique d'une connectivité sans fil, mais comprendra que plus grand est le nombre de modules 13a, 13b et d'équipements 1a, 1b, 1c présentant une connectivité sans-fil, plus fiable sera le procédé.

De façon générale, on comprendra que la connexion d'un équipement 1a, 1b, 1c au réseau 20 est conforme au standard IEEE 1905 (voir plus loin).

Dans l'exemple représenté, le réseau 20 met à la fois en oeuvre un réseau Wi-Fi généré par le boitier 3, et un réseau CPL (Courant Porteur de Ligne). L'équipement 1c est directement connecté au réseau Wi-Fi et dispose lui-même d'une connectivité Bluetooth. Les modules 13a, 13b sont des plugs CPL connecté au réseau CPL, et mettant en oeuvre un réseau Wi-Fi. Les équipements 1a, 1b sont soit connectés en Wi-Fi aux modules 13a, 13b, soit via un lien filaire (par exemple Ethernet). Le boitier 3 est lui-même connecté au réseau CPL via son propre plug CPL 33. Par plug CPL, on entend un boitier spécifique se branchant sur une prise électrique. Dans cet exemple, on remarque que les équipements 1a et 1b sont au final connectés au réseau 20 via une liaison filaire (Ethernet + CPL) même si les modules 13a, 13b disposent d'une connectivité sans-fil.

### Principe de l'invention

Le présent procédé permet de sélectionner automatiquement l'équipement 1a, 1b, 1c optimal pour la restitution du contenu multimédia. Pour cela, le procédé comprend la mise en oeuvre par le module de traitement de données 31 du dispositif 3 (on prend l'exemple où le dispositif est le boitier d'accès à Internet 3) d'étapes de :
(a) identification d'un point d'accès 3, 13a, 13b, 1c du terminal mobile (2) au réseau 20 ;
(b) détermination d'un équipement cible 1a, l'équipement cible 1a étant l'équipement 1a, 1b, 1c du réseau 20 le plus proche dudit point d'accès 3, 13a, 13b, 1c identifié ;
(c) envoi d'une requête de restitution du contenu par l'équipement cible 1a.

Grâce à ce procédé, comme l'on verra, l'utilisateur est « localisé » au sein du foyer par son terminal mobile 2. On peut supposer en effet que sa position et celle de son terminal mobile coïncident lors des déplacements.

Cela permet de déterminer dynamiquement l'équipement 1a, 1b, 1c le plus adapté pour restituer le contenu. Si l'utilisateur se déplace d'une pièce A à une pièce B, comme l'on verra le procédé permet un basculement de la restitution du contenu d'un équipement de la pièce A à un équipement de la pièce B pour suivre l'utilisateur.

### Acquisition d'une topologie

Le procédé commence par une étape préalable (a0) de détermination et de stockage sur un module de stockage de données 32 du dispositif 3 d'une topologie du réseau 20. On note que cette étape est potentiellement une étape continue et dynamique qui est mise en oeuvre sur la durée, éventuellement simultanément avec les autres étapes (la topologie pouvant être déterminée et mise à jour en temps réel).

Par « topologie » du réseau 20, on entend une définition de l'architecture du réseau, en d'autres termes une cartographie de ce réseau 20. En particulier, une topologie décrit les liens entre tous les éléments du réseau (les « noeuds »), et une éventuelle hiérarchie entre eux. Chaque équipement 1a, 1b, 1b, module 13a, 13b, etc. se voit ainsi associé à une position topologique dans le réseau 20, c'est-à-dire une position relativement à tous les autres noeuds du réseau 20.

Par exemple, dans le réseau représenté, l'équipement 1a est topologiquement voisin du module 13a, mais éloigné de l'équipement 1c (il faut passer dans l'ordre par le module 13a, le réseau électrique, le plug CPL 33, le boitier 3, et enfin le réseau Wi-Fi.

Le protocole IEEE 1905 mentionné précédemment facilite l'exploration du réseau 20 et l'établissement de cette topologie, qui est alors stockée dans un espace de stockage du serveur 3 (ainsi que dans tout autre point d'accès 13a, 13b, 1c conforme au même standard) sous forme d'un fichier descriptif.

Le réseau 20 peut évoluer dans le temps. La topologie suit avantageusement cette évolution grâce au protocole IEEE 1905 qui notifie automatiquement tout changement (apparition, disparition d'équipement, etc.).

En particulier, chaque point d'accès 3, 13a, 13b, 1c conforme au standard IEEE 1905 met en oeuvre une Couche d'Abstraction (AL, « abstract layer ») permettant de cacher la diversité des technologies au niveau de la sous-couche de contrôle d'accès au support (MAC, « Media Access Control »).

IEEE 1905.1 fournit un outil permettant de déterminer facilement et automatiquement la topologie du réseau sans tenir compte des technologies utilisées (Ethernet, Wi-Fi, etc.). Pour cela, la Couche d'Abstraction est capable de générer différents messages :
- un message de découverte (0x0000) permettant de détecter les différents équipements voisins également conforme au standard IEEE 1905,
- un message de notification (0x0001) informant les équipements voisins d'un changement dans la topologie,
- un message de requête/réponse (respectivement 0x0002 et 0x0003) permettant de demander la topologie stockée par un autre équipement du réseau

On notera que le présent procédé n'est pas limité à l'obtention d'une topologie conformément au protocole IEEE 1905, et pourra par exemple utiliser le protocole LLDP (« Link Layer Discovery Protocol », i.e. protocole de découverte de couche de lien)

### Point d'accès

Dans l'étape (a), le procédé comprend l'identification d'un point d'accès 3, 13a, 13b, 1c du terminal 2. Par point d'accès, on entend un noeud du réseau 20 avec lequel le terminal 2 établit une connexion sans-fil pour être connecté au réseau domestique 20. Cette connexion est le plus souvent en Wi-Fi, mais on comprendra qu'elle peut être en d'autres protocoles, par exemple Bluetooth.

En pratique, le point d'accès 3, 13a, 13b, 1c du terminal mobile 2 est soit un équipement comprenant une capacité de communication sans-fil (par exemple l'équipement 1c), soit un desdits modules 13a, 13b disposant d'une capacité de communication sans-fil.

En présence de plusieurs points d'accès possible, le terminal 2 se connecte naturellement à celui de signal le plus fort, c'est-à-dire le plus proche, et en particulier celui situé dans la même pièce (car les murs affaiblissent le signal).

Ainsi la position du point d'accès 3, 13a, 13b, 1c du terminal 2 est une bonne estimation de la position physique de l'utilisateur. En d'autres termes, si le terminal 2 est connecté au réseau via un noeud situé dans la pièce A, on peut supposer que l'utilisateur est dans la pièce A.

### Détermination d'équipement cible

Une fois que ce point d'accès est identifié, le module de traitement de données 31 du serveur 3 détermine un « équipement cible ». L'équipement cible est l'équipement 1a, 1b, 1c du réseau 20 le plus proche dudit nouveau point d'accès 3, 13a, 13b, 1c identifié.

Cette proximité est ici une proximité au sens topologique, i.e. en utilisant la topologie déterminée plus tôt. Ainsi, l'étape comprend la comparaison des positions topologiques du point d'accès 3, 13a, 13b, 1c identifié et de tout ou partie des équipements 1a, 1b, 1c (idéalement de chaque équipement 1a, 1b, 1c). On note qu'il n'y a ici en rien une comparaison de force de signal afin de déterminer l'équipement cible 1a, 1b, 1c, et en tout état de cause aucune comparaison de force de signal réalisée par le serveur 3 ou un autre point d'accès 13a, 13b, 1c, comme cela pouvait être connu de l'état de la technique. La seule comparaison de force de signal éventuellement réalisée l'est dans l'étape précédente par le terminal 2 (qui décide à quel point d'accès 3, 13a, 13b, 1c s'accrocher).

On note à ce titre que l'équipement cible 1a, 1b, 1c peut grâce au présent procédé être un équipement connecté filairement à son point d'accès 3, 13a, 13b, 1c, alors qu'une comparaison de force de signal ne permet de comparer que des connexions sans fil.

Dans l'exemple représenté sur la figure 1a, le point d'accès est le module 13a. L'équipement cible est alors l'équipement 1a car c'est le seul équipement à un seul lien du module 13a. Les autres équipements 1b, 1c sont plus éloignés topologiquement.

L'équipement cible est statistiquement l'équipement 1a, 1b, 1c le plus proche de l'utilisateur, et en particulier celui placé dans la pièce dans laquelle il se trouve.

### Restitution

Dans une étape (c), le module de traitement de données 31 du serveur 3 envoie une requête de restitution du contenu par l'équipement cible déterminé, requête envoyée en particulier à l'équipement cible lui-même.

En particulier, cette requête peut contenir le contenu, notamment s'il est stocké sur un serveur NAS 34. Si le dispositif est le terminal 2, il peut lui-même être la source du contenu (par exemple des vidéos stockées sur le terminal 2), et avantageusement sous forme de flux en temps réel. Il est en effet souhaitable que le serveur 3 gère les commandes de rendu des contenus multimédia (lecture, pause, etc.)

Alternativement, la requête peut par exemple contenir une adresse (en particulier internet) pour la récupération du contenu.

Dans tous les cas, le contenu multimédia souhaité par l'utilisateur est alors restitué sur l'équipement cible déterminé, c'est-à-dire l'équipement qui convient à la localisation de l'utilisateur dans le foyer.

Il est à noter que l'équipement cible peut en outre, préalablement à la restitution, servir d'interface pour la sélection du contenu à restituer. Le terminal mobile 2 peut également avoir ce rôle.

### Déplacement de l'utilisateur

Comme expliqué, le présent procédé est capable de suivre les déplacements de l'utilisateur. Pour cela, il comprend les étapes suivantes :
(d) Identification d'un nouveau point d'accès 3, 13a, 13b, 1c du terminal mobile 2 au réseau 20, de sorte à détecter un déplacement du terminal mobile 2 ;
(e) détermination d'un nouvel équipement cible 1c, le nouvel équipement cible 1c étant l'équipement 1a, 1b, 1c du réseau 20 le plus proche dudit nouveau point d'accès 3, 13a, 13b, 1c identifié ;
(f) si le nouvel équipement cible 1c est différent de l'ancien équipement cible 1a, envoi d'une requête de poursuite de la restitution du contenu par le nouvel équipement cible 1a.

Ces étapes (d) à (f) sont similaires aux étapes (a) à (c), et peuvent être répétées à l'infini.

L'étape (d) comprend l'identification d'un « nouveau » point d'accès du terminal mobile (par comparaison à « l'ancien » point d'accès). Cette étape peut être mise en oeuvre automatiquement dès que le serveur détecte un changement de point d'accès du terminal 2. Alternativement, un test est mis en oeuvre à intervalles réguliers.

A partir du nouveau point d'accès, un nouvel équipement cible est déterminé. Il est à noter qu'il est possible que le nouvel équipement cible soit le même que l'ancien, si par exemple il y a plusieurs modules sans-fil dans une même pièce (par exemple un plug CPL Wi-Fi et une connectivité Bluetooth sur l'équipement). Dans un tel cas, la restitution continue normalement.

Dans le cas contraire (i.e. lorsque le nouvel équipement cible 1c est différent de l'ancien équipement cible 1a), le serveur 3 envoie (en particulier au nouvel équipement cible 1c) une requête de poursuite de la restitution du contenu par le nouvel équipement cible 1c. En d'autres termes, le nouvel équipement cible met à son tour en oeuvre la restitution du contenu.

De façon préférée, le serveur 3 envoie plus précisément (aux nouvel et/ou ancien équipements cible 1a, 1c) une requête de basculement de la restitution du contenu de l'ancien équipement cible 1c vers le nouvel équipement cible 1a.

Par basculement, on entend l'interruption de la restitution du contenu sur l'ancien équipement cible, en plus de la restitution (à partir du moment d'interruption, c'est-à-dire sans recommencer depuis le début, ou à un autre moment par exemple depuis le début) du contenu sur le nouvel équipement cible (c'est-à-dire la poursuite).

La requête de basculement comprend donc le plus souvent une requête dans ce sens pour chacun des ancien et nouvel équipements cible (requête de poursuite pour le nouvel équipement cible, et optionnellement requête d'interruption pour l'ancien équipement cible). Si le contenu multimédia est un flux en temps réel, il s'agit seulement d'une interruption d'envoi du flux à l'ancien équipement cible, au profit d'un envoi du flux au nouvel équipement cible. Dans ce cas l'interruption ne nécessite pas forcément de requête spécifique. Le basculement complet permet d'éviter que le contenu continue à être restitué pour rien dans une pièce où l'utilisateur n'est plus. Cela réduit la consommation et limite l'usage des télécommandes.

La **figure 1b** représente un exemple de déplacement du terminal mobile 2 au sein du réseau 20 (du salon vers le bureau). Comme l'on voit, le nouveau point d'accès est l'équipement 1c, ce dernier devient donc l'équipement cible. La restitution du contenu multimédia est donc transférée de l'équipement 1a vers l'équipement 1c.

Tout cela se fait automatiquement et dans le plus grand confort pour l'utilisateur.

### Dispositif

Selon un deuxième aspect, l'invention concerne un dispositif 2, 3 de gestion de la restitution d'un contenu multimédia dans un réseau domestique 20 pour la mise en oeuvre du procédé selon le premier aspect.

Le dispositif 2, 3 comprenant comme expliqué un module de traitement de données 21, 31 configuré pour mettre en oeuvre :
- un module d'identification d'un point d'accès 3, 13a, 13b, 1c du terminal mobile 2 au réseau 20 ;
- un module de détermination d'un équipement cible 1a, l'équipement cible 1a étant l'équipement 1a, 1b, 1c du réseau 20 le plus proche dudit point d'accès 3, 13a, 13b, 1c identifié ;
- un module d'envoi d'une requête de restitution du contenu par l'équipement cible 1a.

Les modules d'identification et de détermination sont configurés pour déterminer des nouveaux points d'accès et nouveaux équipements cible en cas de déplacement de l'utilisateur.

Le module d'envoi est également configuré pour envoyer des requête de poursuite de la restitution (voire basculement de la restitution) dasn ce cas de déplacement de l'utilisateur.

De façon préférée, le terminal mobile 2 ou un boitier d'accès à internet 3 (passerelle domestique) d'un réseau domestique 20 comprend ce dispositif 2, 3 de la gestion de la restitution d'un contenu multimédia dans le réseau domestique 20.

### Produit programme d'ordinateur

Selon un troisième et un quatrième aspects, l'invention concerne un produit programme d'ordinateur comprenant des instructions de code pour l'exécution (sur des moyens de traitement de donnés 31, en particulier ceux du serveur 2, 3, avantageusement le boitier d'accès à Internet 3 ou le terminal 2) d'un procédé de gestion de la restitution d'un contenu multimédia dans le réseau 20 selon le premier aspect de l'invention, ainsi que des moyens de stockage lisibles par un équipement informatique (par exemple la mémoire 32 du serveur 3) sur lequel on trouve ce produit programme d'ordinateur.

## Revendications

1. Procédé de gestion de la restitution d'un contenu multimédia dans un réseau domestique (20) connectant :
- un dispositif (2, 3) comprenant un module de traitement de données (21, 31) ;
- une pluralité d'équipements (1a, 1b, 1c) adaptés pour restituer ledit contenu multimédia ;
- un terminal mobile (2) ;
le procédé étant **caractérisé en ce qu'**il comprend la mise en oeuvre par le module de traitement de données (21, 31) du dispositif (2, 3) d'une étape préalable (a0) de détermination et de stockage sur un module de stockage de données (32) du dispositif (2, 3) d'une topologie du réseau (20) et d'étapes de :
(a) identification d'un point d'accès (3, 13a, 13b, 1c) du terminal mobile (2) au réseau (20) ;
(b) détermination d'un équipement cible (1a), l'équipement cible (1a) étant l'équipement (1a, 1b, 1c) du réseau (20) le plus proche dudit point d'accès (3, 13a, 13b, 1c) identifié, comprenant la comparaison de positions topologiques du point d'accès (3, 13a, 13b, 1c) identifié et de tout ou partie des équipements (1a, 1b, 1c) ;
(c) envoi d'une requête de restitution du contenu par l'équipement cible (1a).

2. Procédé selon la revendication 1, comprenant en outre la mise en oeuvre par les moyens de traitement de données (21, 31) du dispositif (2, 3) d'étapes de :
(d) Identification d'un nouveau point d'accès (3, 13a, 13b, 1c) du terminal mobile (2) au réseau (20), de sorte à détecter un déplacement du terminal mobile (2) ;
(e) détermination d'un nouvel équipement cible (1c), le nouvel équipement cible (1c) étant l'équipement (1a, 1b, 1c) du réseau (20) le plus proche dudit nouveau point d'accès (3, 13a, 13b, 1c) identifié, comprenant la comparaison de positions topologiques du point d'accès (3, 13a, 13b, 1c) identifié et de tout ou partie des équipements (1a, 1b, 1c) ;
(f) si le nouvel équipement cible (1c) est différent de l'ancien équipement cible (1a), envoi d'une requête de poursuite de la restitution du contenu par le nouvel équipement cible (1a).

3. Procédé selon la revendication 2, dans lequel l'étape (f) comprend, si le nouvel équipement cible (1c) est différent de l'ancien équipement cible (1a), l'envoi d'une requête de basculement de la restitution du contenu de l'ancien équipement cible (1c) vers le nouvel équipement cible (1a).

4. Procédé selon l'une des revendications 1 à 3, dans lequel chaque équipement (1a, 1b, 1c) soit comprend une capacité de communication sans-fil, soit est connecté au réseau (20) via un module (13a, 13b) disposant d'une capacité de communication sans-fil.

5. Procédé selon la revendication 4 dans lequel un point d'accès (3, 13a, 13b, 1c) du terminal mobile (2) est soit un équipement comprenant une capacité de communication sans-fil, soit un desdits modules (13a, 13b) disposant d'une capacité de communication sans-fil.

6. Procédé selon l'une des revendications 1 à 5, dans lequel le terminal mobile (2) comprend ledit dispositif (2, 3).

7. Procédé selon l'une des revendications 1 à 5, dans lequel un boitier d'accès à internet (3) du réseau domestique (20) comprend ledit dispositif (2, 3).

8. Dispositif (2, 3) de gestion de la restitution d'un contenu multimédia dans un réseau domestique (20) connectant :
- une pluralité d'équipements (1a, 1b, 1c) adaptés pour restituer ledit contenu multimédia ;
- un terminal mobile (2) ;
le dispositif (2, 3) étant **caractérisé en ce qu'**il comprend un module de stockage de données (32), et un module de traitement de données (21, 31) configuré pour mettre en oeuvre :
- un module de détermination et de stockage sur les moyens de données (32) d'une topologie du réseau (20) ;
- un module d'identification d'un point d'accès (3, 13a, 13b, 1c) du terminal mobile (2) au réseau (20) ;
- un module de détermination d'un équipement cible (1a), l'équipement cible (1a) étant l'équipement (1a, 1b, 1c) du réseau (20) le plus proche dudit point d'accès (3, 13a, 13b, 1c) identifié par comparaison de positions topologiques du point d'accès (3, 13a, 13b, 1c) identifié et de tout ou partie des équipements (1a, 1b, 1c) ;
- un module d'envoi d'une requête de restitution du contenu par l'équipement cible (1a).

9. Boitier d'accès à internet (3) d'un réseau domestique (20) comprenant un dispositif (2, 3) selon la revendication 8 de gestion de la restitution d'un contenu multimédia dans le réseau domestique (20).

10. Produit programme d'ordinateur comprenant des instructions de code pour l'exécution d'un procédé de gestion de la restitution d'un contenu multimédia dans un réseau domestique (20) selon l'une des revendications 1 à 7 lorsque le programme est exécuté sur un ordinateur.

11. Moyen de stockage lisible par un équipement informatique sur lequel un produit programme d'ordinateur comprend des instructions de code pour l'exécution d'un procédé de gestion de la restitution d'un contenu multimédia dans un réseau domestique (20) selon l'une des revendications 1 à 7.

## Patentansprüche

1. Verfahren zur Verwaltung der Wiedergabe eines Multimedia-Inhalts in einem Heimnetzwerk (20), das verbindet:
- eine ein Datenverarbeitungsmodul (21, 31) enthaltende Vorrichtung (2, 3);
- eine Vielzahl von Geräten (1a, 1b, 1c), die geeignet sind, den Multimedia-Inhalt wiederzugeben;
- ein mobiles Endgerät (2);
wobei das Verfahren **dadurch gekennzeichnet ist, dass** es die Durchführung, durch das Datenverarbeitungsmodul (21, 31) der Vorrichtung (2, 3), eines vorhergehenden Schritts (a0) der Bestimmung und der Speicherung einer Topologie des Netzwerks (20) in einem Datenspeichermodul (32) der Vorrichtung (2, 3) und folgender Schritte enthält:
(a)Identifizierung eines Zugangspunkts (3, 13a, 13b, 1c) des mobilen Endgeräts (2) zum Netzwerk (20) ;
(b)Bestimmung eines Zielgeräts (1a), wobei das Zielgerät (1a) das Gerät (1a, 1b, 1c) des Netzwerks (20) ist, das dem identifizierten Zugangspunkt (3, 13a, 13b, 1c) am nächsten liegt, die den Vergleich topologischer Positionen des identifizierten Zugangspunkts (3, 13a, 13b, 1c) und aller oder eines Teils der Geräte (1a, 1b, 1c) enthält;
(c)Senden einer Anforderung zur Wiedergabe des Inhalts durch das Zielgerät (1a).

2. Verfahren nach Anspruch 1, das außerdem die Durchführung folgender Schritte durch die Datenverarbeitungseinrichtungen (21, 31) der Vorrichtung (2, 3) enthält:
(d) Identifizierung eines neuen Zugangspunkts (3, 13a, 13b, 1c) des mobilen Endgeräts (2) zum Netzwerk (20), um eine Bewegung des mobilen Endgeräts (2) zu erfassen;
(e) Bestimmung eines neuen Zielgeräts (1c), wobei das neue Zielgerät (1c) das Gerät (1a, 1b, 1c) des Netzwerks (20) ist, das dem identifizierten neuen Zugangspunkt (3, 13a, 13b, 1c) am nächsten liegt, die den Vergleich von topologischen Positionen des identifizierten Zugangspunkts (3, 13a, 13b, 1c) und aller oder eines Teils der Geräte (1a, 1b, 1c) enthält;
(f)wenn das neue Zielgerät (1c) sich vom alten Zielgerät (1a) unterscheidet, Senden einer Fortsetzungsanforderung der Wiedergabe des Inhalts durch das neue Zielgerät (1a).

3. Verfahren nach Anspruch 2, wobei der Schritt (f), wenn das neue Zielgerät (1c) sich vom alten Zielgerät (1a) unterscheidet, das Senden einer Umschaltanforderung der Wiedergabe des Inhalts vom alten Zielgerät (1c) zum neuen Zielgerät (1a) enthält.

4. Verfahren nach einem der Ansprüche 1 bis 3, wobei jedes Gerät (1a, 1b, 1c) entweder eine drahtlose Verbindungsfähigkeit enthält oder über ein über eine drahtlose Verbindungsfähigkeit verfügendes Modul (13a, 13b) an das Netzwerk (20) angeschlossen ist.

5. Verfahren nach Anspruch 4, wobei ein Zugangspunkt (3, 13a, 13b, 1c) des mobilen Endgeräts (2) entweder ein eine drahtlose Verbindungsfähigkeit enthaltendes Gerät oder eines der über eine drahtlose Verbindungsfähigkeit verfügenden Module (13a, 13b) ist.

6. Verfahren nach einem der Ansprüche 1 bis 5, wobei das mobile Endgerät (2) die Vorrichtung (2, 3) enthält.

7. Verfahren nach einem der Ansprüche 1 bis 5, wobei eine Internet-Zugangsbox (3) des Heimnetzwerks (20) die Vorrichtung (2, 3) enthält.

8. Vorrichtung (2, 3) zur Verwaltung der Wiedergabe eines Multimedia-Inhalts in einem Heimnetzwerk (20), die verbindet:
- eine Vielzahl von Geräten (1a, 1b, 1c), die geeignet sind, den Multimedia-Inhalt wiederzugeben;
- ein mobiles Endgerät (2);
wobei die Vorrichtung (2, 3) **dadurch gekennzeichnet ist, dass** sie ein Datenspeichermodul (32) und ein Datenverarbeitungsmodul (21, 31) enthält, das konfiguriert ist, anzuwenden:
- ein Bestimmungs- und Speichermodul auf den Einrichtungen von Daten (32) einer Topologie des Netzwerks (20);
- ein Identifizierungsmodul eines Zugangspunkts (3, 13a, 13b, 1c) des mobilen Endgeräts (2) zum Netzwerk (20);
- ein Bestimmungsmodul eines Zielgeräts (1a), wobei das Zielgerät (1a) das Gerät (1a, 1b, 1c) des Netzwerks (20) ist, das dem identifizierten Zugangspunkt (3, 13a, 13b, 1c) am nächsten liegt, durch Vergleich von topologischen Positionen des identifizierten Zugangspunkts (3, 13a, 13b, 1c) und aller oder eines Teils der Geräte (1a, 1b, 1c);
- ein Sendemodul einer Anforderung zur Wiedergabe des Inhalts durch das Zielgerät (1a).

9. Internet-Zugangsbox (3) eines Heimnetzwerks (20), die eine Vorrichtung (2, 3) nach Anspruch 8 zur Verwaltung der Wiedergabe eines Multimedia-Inhalts im Heimnetzwerk (20) enthält.

10. Computerprogrammprodukt, das Codeanweisungen zur Ausführung eines Verwaltungsverfahrens der Wiedergabe eines Multimedia-Inhalts in einem Heimnetzwerk (20) nach einem der Ansprüche 1 bis 7 enthält, wenn das Programm auf einem Computer ausgeführt wird.

11. Speichereinrichtung, die von einer EDV-Ausrüstung lesbar ist, auf der ein Computerprogrammprodukt Codeanweisungen für die Ausführung eines Verwaltungsverfahrens der Wiedergabe eines Multimedia-Inhalts in einem Heimnetzwerk (20) nach einem der Ansprüche 1 bis 7 enthält.

## Claims

1. Method for managing the rendering of a multimedia content in a domestic network (20) connecting:
- a device (2, 3) comprising a data processing module (21,31);
- a plurality of equipment items (1a, 1b, 1c) adapted to render said multimedia content;
- a mobile terminal (2);
the method being **characterized in that** it comprises the implementation by the data processing module (21, 31) of the device (2, 3) of a prior step (a0) of determination and of storage on a data storage module (32) of the device (2, 3) of a topology of the network (20) and of steps of:
(a) identification of a point of access (3, 13a, 13b, 1c) of the mobile terminal (2) to the network (20) ;
(b) determination of a target equipment item (1a), the target equipment item (1a) being the equipment item (1a, 1b, 1c) of the network (20) closest to said identified access point (3, 13a, 13b, 1c), comprising the comparison of topological positions of the identified access point (3, 13a, 13b, 1c) and of all or some of the equipment items (1a, 1b, 1c);
(c) dispatching of a request for rendering the content by the target equipment item (1a).

2. Method according to Claim 1, furthermore comprising the implementation by the data processing means (21, 31) of the device (2, 3) of steps of:
(d) identification of a new point of access (3, 13a, 13b, 1c) of the mobile terminal (2) to the network (20), so as to detect a displacement of the mobile terminal (2);
(e) determination of a new target equipment item (1c), the new target equipment item (1c) being the equipment item (1a, 1b, 1c) of the network (20) closest to said new identified access point (3, 13a, 13b, 1c), comprising the comparison of topological positions of the identified access point (3, 13a, 13b, 1c) and of all or some of the equipment items (1a, 1b, 1c);
(f) if the new target equipment item (1c) is different from the former target equipment item (1a), dispatching of a request for continuing the rendering of the content by the new target equipment item (1a).

3. Method according to Claim 2, in which step (f) comprises, if the new target equipment item (1c) is different from the former target equipment item (1a), the dispatching of a request for toggling the rendering of the content from the former target equipment item (1c) to the new target equipment item (1a).

4. Method according to one of Claims 1 to 3, in which each equipment item (1a, 1b, 1c) either comprises a wireless communication capability, or is connected to the network (20) via a module (13a, 13b) having a wireless communication capability at its disposal.

5. Method according to Claim 4, in which a point of access (3, 13a, 13b, 1c) of the mobile terminal (2) is either an equipment item comprising a wireless communication capability, or one of said modules (13a, 13b) having a wireless communication capability at its disposal.

6. Method according to one of Claims 1 to 5, in which the mobile terminal (2) comprises said device (2, 3) .

7. Method according to one of Claims 1 to 5, in which an Internet access box (3) of the domestic network (20) comprises said device (2, 3).

8. Device (2, 3) for managing the rendering of a multimedia content in a domestic network (20) connecting:
- a plurality of equipment items (1a, 1b, 1c) adapted to render said multimedia content;
- a mobile terminal (2);
the device (2, 3) being **characterized in that** it comprises a data storage module (32), and a data processing module (21, 31) which is configured to implement:
- a module for determination and storage on the means of data (32) of a topology of the network (20);
- a module for identifying a point of access (3, 13a, 13b, 1c) of the mobile terminal (2) to the network (20) ;
- a module for determining a target equipment item (1a), the target equipment item (1a) being the equipment item (1a, 1b, 1c) of the network (20) closest to said access point (3, 13a, 13b, 1c) identified by comparison of topological positions of the identified access point (3, 13a, 13b, 1c) and of all or some of the equipment items (1a, 1b, 1c);
- a module for dispatching a request for rendering the content by the target equipment item (1a).

9. Internet access box (3) of a domestic network (20) comprising a device (2, 3) according to Claim 8 for managing the rendering of a multimedia content in the domestic network (20).

10. Computer program product comprising code instructions for the execution of a method for managing the rendering of a multimedia content in a domestic network (20) according to one of Claims 1 to 7 when the program is executed on a computer.

11. Storage means readable by a computing equipment item on which a computer program product comprises code instructions for the execution of a method for managing the rendering of a multimedia content in a domestic network (20) according to one of Claims 1 to 7.
